# FASCICULE DE BREVET EUROPEEN

(11) **EP 0 297 007 B1**
(45) Date de publication et mention de la délivrance du brevet: **10.02.1993**
(21) Numéro de dépôt: 88430014.6
(22) Date de dépôt: 10.06.1988
(51) Int. Cl.: B60K 25/08

(54) **Dispositif de prise de mouvement ou de force pour véhicules automobiles**
Vorrichtung zur Drehkraftabnahme an Kraftfahrzeugen
Device for deriving power from a motor vehicle

(30) Priorité: 18.06.1987 FR 8708685
(43) Date de publication de la demande: 28.12.1988
(73) Titulaire: Purguette, Edmond, 13100 Aix-en-Provence (FR)
(72) Inventeur: Purguette, Edmond, 13100 Aix-en-Provence (FR)
(74) Mandataire: Moretti, René

(56) Documents cités:
- EP-A- 0 011 986
- CH-A- 99 382
- FR-A- 932 494
- GB-A- 352 954

## Description

La présente invention a pour objet des dispositifs de prise de mouvement ou de force qui utilisent la rotation d'au moins une roue motrice d'un véhicule automobile selon le préambule de la revendication 1. Un tel dispositif est connu par exemple du document CH A 99382.

Le secteur technique de l'invention est celui des installations de transmission de mouvement ou de puissance à toute machine mesurant ou nécessitant un entraînement en rotation. Une des applications de l'invention est le contrôle de distance parcourue par une automobile sans déplacement de celle-ci. Une autre application est l'entraînement de machines sans moteur incorporé, tels les groupes électrogènes, les pompes, les compresseurs etc...

On connaît depuis longtemps des équipements qui permettent une telle transmission de puissance et un certain nombre de brevets ont été déposés en ce domaine. on peut citer, par exemple, le brevet suisse CH A 99382 de Monsieur SCHOEDELIN déposé le 31 Décembre 1921, concernant une "remorque susceptible de l'atteler à un véhicule automobile et de recevoir, à l'arrêt, pour l'utiliser la force motrice du moteur du véhicule". Ce brevet décrit un dispositif comportant un chemin de roulement constitué de courroie portée par deux poulies et entraînée par le mouvement rotatif des roues motrices du véhicule qui peut monter dessus, une fois la remorque portant cedit dispositif, dételée de celui-ci et posée à terre. La puissance ainsi recueillie par entraînement de la courroie est transmise ensuite à une machine de type chantier, montée sur ladite remorque.

Le document FR A 932.494 décrit par ailleurs un "dispositif de commande mécanique actionné par des roues de véhicules à moteur". Ce dispositif comporte un châssis reposant sur le sol et portant deux axes montés sur roulement et recevant chacun soit deux diabolos, soit deux cylindres reliés alors deux à deux par une courroie sans fin : en posant les roues d'un véhicule sur ce dispositif, celles-ci peuvent entraîner par friction en rotation les diabolos ou les courroies qui transmettent par d'autres courroies leur mouvement à tous genres de machine.
Un autre brevet anglais NO. 352.954 de Monsieur JAMES déposé le 14 Avril 1930, concerne des "moyens de transmission de puissance à partir de la rotation des roues motrices de véhicules à moteur". Ce brevet consiste en un dispositif de relevage de l'essieu porteur des roues motrices du véhicule et qui, une fois les roues décollées du sol, applique contre chacune de celles-ci un galet entraîné alors par friction par la rotation desdites roues et transmettant lui-même le mouvement à un ensemble de transmission.

On peut noter cependant que les équipements décrits ci-dessus sont donc connus depuis plus de quarante à soixante ans, et pourtant aucun n'a permis au moins en France à ce jour, un développement significatif et important de matériel utilisant ce principe de prise de force sur roue de véhicule automobile.

En effet, ces dispositifs et d'autres qui ont été testés depuis, présentent de nombreux inconvénients dont certains constituent même un danger d'utilisation :
- En premier lieu, on peut citer la très mauvaise stabilité du véhicule dans le cas d'utilisation de courroie montée sur poulies (cas des deux premiers brevets cités), pour qu'il y ait entraînement sans glissement, il faut en effet que les roues appuient fortement sur la courroie tendue ou que la surface de contact soit grande avec une courroie détendue. L'une ou l'autre de ces conditions induisent alors en l'absence de moyens adaptés, objet de la présente invention, des forces perpendiculaires au sens de rotation de la courroie : celle-ci se déchausse alors très vite des poulies, et même quand celles-ci sont équipées de crans ou de flasques latéraux, la courroie se détériore alors ou c'est le mécanisme support qui lâche, ou c'est le véhicule qui dérape constituant un certain danger pour le personnel.
- Le problème général ci-dessus est accentué sur les véhicules à traction arrière, à cause de l'impossibilité d'aligner correctement les dispositifs et les roues du véhicule. Les efforts latéraux sont alors accentués et plus rien ne résiste alors.
- Une autre solution pour éviter l'inconvénient ci-dessus, est d'utiliser le frottement de galet directement sur les roues, ce qui est le cas du troisième brevet cité. En effet, les efforts latéraux, quoique toujours importants, sont réduits car les galets assurent un meilleur contact tangentiel dans le sens de la rotation et la reprise mécanique est plus facile à contrôler que par une courroie qui doit rester libre. En ce cas cependant, la surface de contact est faible, il y a donc déperdition de puissance par glissement, avec un échauffement et une usure de pneumatiques.
- Par ailleurs, quel que soit le dispositif précédent, il est nécessaire de caler celui-ci, en cas d'utilisation sur terrain en pente, ce qui est souvent le cas en extérieur. Il est en effet obligatoire sous peine d'accentuer encore plus le problème de base cité ci-dessus, que l'ensemble véhicule/dispositif soit parfaitement horizontal. Cela demande donc un réglage et un calage longs et fastidieux.
- Enfin, on peut souligner également que la plupart des utilisations demandent une rotation à une vitesse donnée et constante : que ce soit en effet, par exemple pour produire du courant électrique (groupe électrogène), un débit d'air (compresseur) ou une alimentation en eau (pompe), il est nécessaire d'assurer un entraînement à vitesse constante quelle que soit la charge appliquée à ces machines. La régulation du régime du moteur du véhicule s'avère alors difficile à assurer.

Le problème posé est de pouvoir récupérer le mouvement ou la puissance transmise aux roues d'un véhicule par le moteur de celui-ci, en toute sécurité et avec un rendement élevé, sans risque pour l'utilisateur et le matériel ; de plus il doit être possible de régler la vitesse de rotation à un nombre de tours/minute constant quel que soit le couple appliqué par la machine récupérant ladite puissance.

Le problème est résolu par les caractéristiques définies dans la partie caractérisante de la revendication 1, à savoir :

Dans un dispositif de prise de mouvement pour véhicule automobile du type de ceux tels que décrits dans le document CHA 99 382, comportant au moins un bâti supportant deux arbres poulies, montés parallèles sur roulement, dont l'un au moins est relié à tout moyen de transmission et qui sont entourés par une courroie sans fin, les deux dits arbres poulies comportent, sur leur surface externe cylindrique des nervures circulaires, situées dans des plans perpendiculaires à leurs axes et s'encastrant dans des nervures de même profil, situées sur la face interne de la courroie et ledit bâti est fixé sur un châssis monté pivotant en rotation dans le plan horizontal par rapport à un deuxième châssis, sur lequel il s'appuie, de telle façon que les points de contact entre la roue du véhicule et ladite courroie ont une direction commune de mouvement tangentiel.

Les revendications dépendantes concernent les modes particuliers de réalisation de cette invention, tels que par exemple :
- ledit châssis peut comporter un système de suspension et d'amortisseurs et lesdites nervures sont de forme triangulaire de type Poly V.
- le dispositif peut également comporter au moins un sous-ensemble de compensation de dénivelé, qui comprend un cadre supérieur, sur lequel s'appuie le châssis inférieur d'un bâti, et un cadre inférieur qui repose sur le sol, lesquels cadres sont reliés par des bras articulés et guidés, et par tout moyen connu permettant de les écarter et de les rapprocher pour régler la hauteur du cadre supérieur par rapport au sol.
- le dispositif peut également comporter un sous-ensemble de régulation qui comprend entre autres un comparateur de la valeur de la vitesse de rotation mesurée par un tachymètre avec une valeur de consigne, un moteur à courant continu dont l'arbre agit sur tout moyen connu de contrôle de régime du moteur du véhicule, un élément de recopie donnant la position de l'arbre dudit moteur à courant continu et un interface d'alimentation commandé par le comparateur et pilotant le moteur à courant continu.

Le résultat est un nouveau dispositif de prise de mouvement ou de force qui utilise la rotation d'au moins une roue motrice d'un véhicule automobile.

Les avantages de ces dispositifs sont multiples, tant sur le plan du rendement, de la sécurité, de l'adaptation à tout type de véhicule, de l'utilisation et de la fiabilité.

En effet, des dispositifs réalisés suivant l'invention assurent une grande surface de contact entre la courroie et la roue du véhicule, garantissant l'entraînement en rotation sans glissement, et donc sans usure des pneumatiques et sans perte d'énergie.

Par ailleurs, les surfaces en contact de la courroie et des poulies comportent des nervures de type Poly-V, de forme triangulaire, encastrées les unes dans les autres, interdisant le glissement latéral de l'une par rapport à l'autre et éliminant les risques de détérioration ou de déchaussement. Ceci a été vérifié lors de nombreux essais et résulte d'études et de tests sur d'autres systèmes.

La sécurité est également renforcée par la possibilité de rotation du bâti support par rapport au sol, permettant un alignement optimum entre la roue et la courroie, diminuant ainsi les efforts latéraux et les risques de sortie du véhicule. Des systèmes de sécurité complémentaires tels que décrits ci-après peuvent en plus, et avantageusemnet, garantir l'utilisateur contre de tels risques.

L'ensemble du dispositif peut être utilisé sur tout type de véhicules, que ce soit à traction arrière ou à traction avant, sur tout terrain, même incliné ou en escalier comme au bord d'un trottoir, et peut entraîner toute machine, même à charge variable.

Une application de ce dispositif, outre la prise de force pour l'entraînement des machines, est le contrôle de distance parcourue par une automobile, comme par exemple pour la vérification des compteurs de taxis, ou le réglage du moteur lui-même par un garagiste, qui peut alors effectuer ce réglage à divers régimes sous couple de freinage donné.

La description suivante se réfère aux dessins annexés qui représentent, sans aucun caractère limitatif, un exemple de réalisation d'un dispositif suivant l'invention. Cet exemple n'est pas exhaustif et d'autres dispositifs peuvent être envisagés, en particulier, on a représenté deux bâtis sous deux roues motrices, mais un seul peut être envisagé et la machine entraînée est figurée portée par le véhicule, alors qu'elle pourrait être à poste fixe ou posée au sol.

La figure 1 est une vue perspective de deux sous-ensembles principaux constituant un dispositif, l'un pour la prise de mouvement et l'autre pour l'orientation.

La figure 2 est une vue perspective du sous-ensemble de compensation dénivelé.

La figure 3 est un schéma du système de câblage du sous-ensemble de contrôle et de régulation de vitesse.

La figure 4 est une vue perspective d'ensemble d'un dispositif complet placé sous un véhicule de type camionnette et permettant l'entraînement de divers matériels portés sur celle-ci.

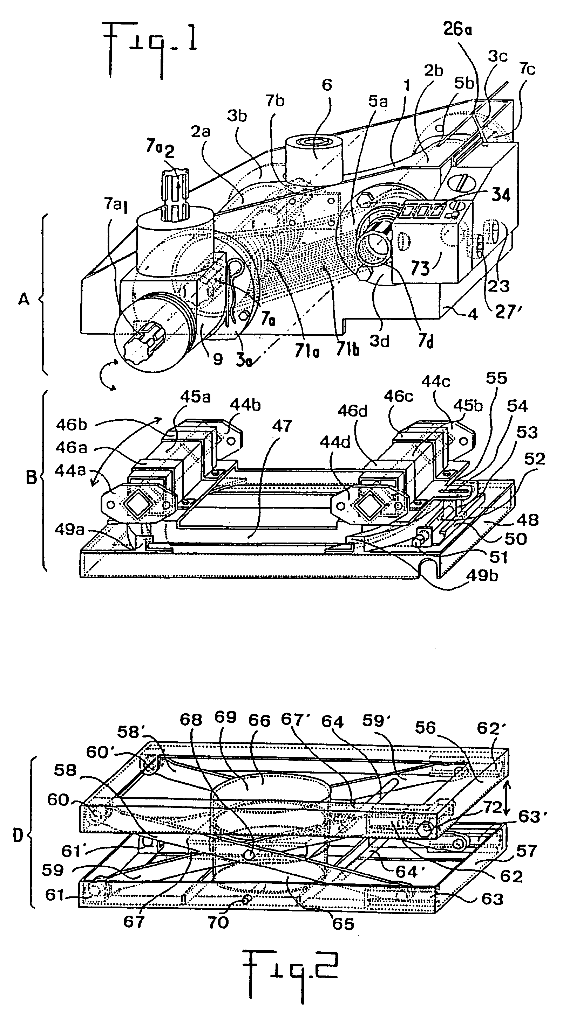

La figure 1 représente deux sous-ensembles A et B, constituant après assemblage un ensemble C de prise de mouvement et d'orientation.

Le premier sous-ensemble A de prise de mouvement comporte un bâti 4, supportant deux arbres, taillés en poulies de type Poly-V 2a et 2b, c'est-à-dire dont la surface externe comporte des nervures 71a, circulaires, de forme triangulaire, situées dans des plans perpendiculaires à l'axe des arbres; ceux-ci sont montés parallèles, l'axe de l'un pouvant être plus haut que l'axe de l'autre, suivant que le dispositif est prévu pour un véhicule à traction arrière ou avant, mais pour être polyvalents, les deux arbres peuvent être également dans le même plan horizontal. Ici, le dispositif est représenté plus spécialement pour un véhicule à traction avant ou à traction arrière, mais dont les roues tourneraient en marche arrière.

Les deux arbres poulies 2a et 2b sont entourés par une courroie sans fin 1, de type Poly-V, comportant sur sa face interne des nervures 71b d'un profil tel qu'elles s'encastrent dans celles des arbres poulies et empêchent tout déplacement latéral relatif entre cesdites poulies et la courroie 1.

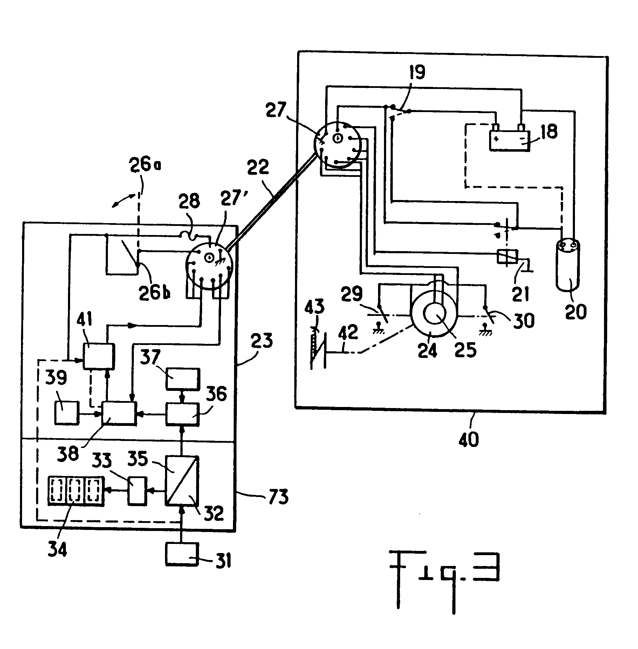

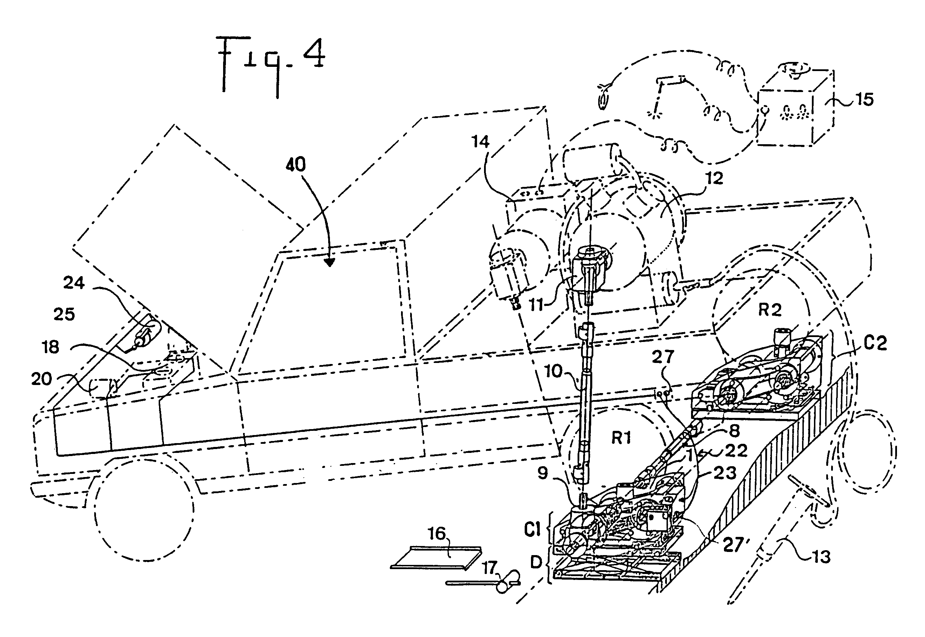

Celle-ci reçoit la roue motrice R1 d'un véhicule tel que représenté sur la figure 4. Pour cela et afin d'obtenir un rendement et une sécurité optimum, la courroie 1 a, de préférence, une largeur égale à deux à trois fois celle de la roue et comporte alors environ cinquante nervures 71b, pour un véhicule de tourisme. Sa longueur est fonction de l'écartement entre les deux arbres 2a et 2b et sa tension est assurée par déplacement et blocage d'un des arbres 2b dans des lumières 5a et 5b de forme allongée, dans une direction voisine de celle définie par le plan contenant les deux axes desdits arbres.

Le diamètre de ces arbres poulies 2 peut être beaucoup plus petit que ceux des roues motrices R1, car c'est la courroie 1 qui s'adapte à celles-ci et assure la courbe qui permet une surface de contact importante, donc sans glissement ni échauffement.

La surface externe de la courroie, en contact avec la roue peut être recouverte d'un revêtement anti-dérapant et anti-abrasif.

Les arbres poulies 2a et 2b sont montées sur des paliers à flasques à roulements 3a et 3b pour l'un, 3c et 3d pour l'autre, fixés sur le bâti 4. Ces arbres 2 sont dotés, à leurs extrémités sortant à l'extérieur du bâti, d'embouts, par exemple cannelés 7a, 7b, 7c, et 7d, permettant de les accoupler à tout système et moyens de transmission de mouvement rotatif. Par exemple, il peut être adapté sur l'embout 7a un boîtier renvoi d'angle orientable 9, offrant deux sorties d'arbres également cannelés et d'axes perpendiculaires 7a1 et 7a2.

A titre d'exemple de réalisation et en option, un boîtier 23 est monté sur le bâti 4, permettant d'assurer trois fonctions, montées toutes ensembles ou séparables. La première est la mesure par un équipement 73 tachymétrique, comportant un écran 34 et à partir de tout capteur connu de type opto-électronique, de la vitesse de rotation de l'arbre 2b ou après conversion, celle de la roue R1 ou celle simulée du véhicule; la deuxième, à partir de la prise 27′, est la régulation du moteur du véhicule pour conserver une vitesse constante de rotation et la troisième est une sécurité frontale coupant l'alimentation dudit moteur du véhicule en cas de risque de sortie de la roue R1 qui viendrait alors en appui sur le levier 26a ou qui solliciterait tout autre capteur de position, lequel levier, associé à un commutateur, coupe ladite alimentation.

Un exemple de schéma électrique de ce boîtier 23 est représenté figure 3.

La deuxième fonction de régulation peut être montée dans un boîtier indépendant au bâti 4 et relié par câble à celui-ci.

Le bâti 4 peut comporter, en outre, au moins un rouleau de sécurité latéral 6, monté sur roulement et d'axe vertical, placé sur au moins un côté dudit bâti. Ce rouleau constitue une butée qui empêche toute sortie latérale de la roue R1 du véhicule, si celle-ci vient en appui et qui pouvant tourner, est entraînée en rotation sans provoquer l'usure du flanc du pneumatique de la roue.

Le premier sous-ensemble A est monté sur un deuxième sous-ensemble B par l'intermédiaire des platines 44a, 44b, 44c et 44d de celui-ci sur le bâti 4 par tout moyen d'assemblage, par exemple de boulons. Ces platines supports sont elles-mêmes solidaires de systèmes amortisseurs 45a et 45b réduisant les chocs et les vibrations, reliés à un châssis mobile 47 par des fixations 46a, 46b, 46c et 46d: ce système ou tout équivalent, permet de réduire la pollution phonique et d'augmenter la durée de vie des composants.

Ledit châssis mobile 47 est monté pivotant en rotation dans le plan horizontal, par rapport à un deuxième châssis 48 sur lequel il s'appuie : cette rotation est permise, à titre d'exemple sur la figure 1, par des guides en forme de secteurs circulaires 49a et 49b solidaires du châssis 48 et dans lequel peut tourner le châssis mobile 47 comportant des secteurs de rails circulaires glissant dans les guides, grâce à un matériau autolubrifiant, ou un système à roulement à billes.

La position relative des deux sous-ensembles A et B permet alors deux types d'utilisation dont seul le premier est illustré figure 1 :
1°) Si les deux sous-ensembles sont assemblés de telle façon que l'axe de rotation du châssis mobile 47 coupe perpendiculairement l'axe de la roue R1, situé dans le plan médian des deux arbres poulies 2a et 2b, on règle l'alignement du bâti 4, et donc de la courroie 1 avec ladite roue, de telle façon que leurs points de contact ont une direction commune de mouvements; ceci diminue considérablement les efforts latéraux et limite les risques de sortie latérale ou de déchaussement de courroie. Pour cela, on dispose sur le châssis 48 un système de réglage 50, qui permet en tournant la tête de vis 51, de faire se déplacer le long de la tige filetée 52 un curseur 53 doté d'un téton 54 qui entraîne le châssis mobile 47 par appui dans l'ouverture 55.
2°) Si les deux sous-ensembles sont assemblés de telle façon que l'axe de rotation du châssis mobile 47 est déporté vers l'avant par rapport à l'axe de la roue ou du plan médian des deux arbres poulies 2a et 2b, l'alignement ci-dessus se fera de lui-même, car toute force latérale tendra toujours à faire pivoter le châssis mobile jusqu'à son point d'équilibre; cette solution ne nécessite pas de système de réglage 50.

La figure 2 est une vue perspective d'un sous-ensemble D de compensation de dénivelés, pour pouvoir mettre un véhicule horizontal sur tout terrain incliné afin d'utiliser un dispositif de prise de force décrit à la figure 1 dans les meilleures conditions.

Ce sous-ensemble D comprend deux cadres supports 56 et 57 : le cadre supérieur 56 pouvant recevoir par empilage le châssis inférieur 48 du module C décrit dans la figure 1 et le cadre inférieur 57 reposant sur le sol.

Ces deux cadres 56 et 57 sont reliés entre eux par des bras 58, 59 et 58′, 59′ : ces quatre bras pivotent chacun à une de leur extrémité dans un berceau fixe 60, 61 et 60′, 61′ respectivement solidaires d'un côté d'un cadre support et formant articulations; leurs autres extrémités coulissent dans des guides 62, 63 et 62′, 63′, solidaires de l'autres côté de l'autre cadre support.

Les quatre bras sont maintenus écartés et ensemble par des entretoises 64 et 64′.

Les cadres 56 et 57 peuvent alors être écartés l'un de l'autre pour soulever toute charge, grâce à tout moyen de type vérin hydraulique ou pneumatique, ou même mécanique. On peut utiliser par exemple un boîtier fixe cylindrique 65, solidaire du cadre inférieur 57 autour duquel peut coulisser une partie mobile 66 dotée de guides 67, 67′ recevant les axes de pivotement 68, 68′, des bras 58, 59 et 58′, 59′. L'ensemble boîtier fixe 65 et mobile 66 contient par exemple une chambre à air de véhicule 69.

Cette chambre à air peut être gonflée par le raccord de valve 70 et pousse alors vers le haut la partie mobile 66 du boîtier qui, entraînant les axes 68, 68′, relèvent les bras 58, 59, 58′ et 59′ qui eux-mêmes soulèvent le cadre 56 et toute charge qui s'appuie dessus, donc le module C et la roue du véhicule posée dessus.

Une fois mis à la bonne hauteur, on dispose une cale de sécurité empêchant le cadre 56 de s'affaisser ou on bloque au moins deux des quatre extrémités des bras dans les guides 62, 63, 62′ et 63′ par des butées 72.

La figure 3 est un schéma du système de câblage du sous-ensemble de mesure de contrôle et de régulation de vitesse inclus dans les boîtier 23 cités dans la figure 1.

Ce système comprend tout d'abord un équipement tachymétrique 73 recevant un signal d'un capteur 31, par exemple de type opto-électronique, monté par exemple sur ou à proximité de l'arbre 2b (voir figure 1). Ledit signal est mis en forme par un convertisseur 35 relié à une horloge 32 qui le restitue sous forme de signaux rectangulaires dont la fréquence est proportionnelle à la vitesse de rotation détectée. Le signal issu du convertisseur 35 est dirigé en 33 pour être calibré, compté et décodé en vue de l'affichage optique permettant une lecture rapide, directe et précise, soit au choix, de la vitesse de rotation de l'arbre tournant, soit celle de la roue du véhicule en nombre de tours/minues, soit par intégration la distance fictive parcourue par ledit véhicule.

Cet équipement tachymétrique 73 peut fonctionnner indépendamment du reste du sous-ensemble de régulation 23, en particulier dans les utilisations de contrôle de compteurs kilométriques.

Le signal issu de l'élément convertisseur 35 peut être envoyé d'autre part, sous forme de tension continue analogique, dont la valeur est proportionnelle au nombre de tours/minute de temps relevés par le capteur 31.

Un transmetteur de valeur de consigne 37 (présélection de la vitesse de l'arbre tournant, donc du régime moteur souhaité) indique une tension de sortie qui est comparée avec la tension issue du convertisseur 35 dans un amplificateur différentiel 36.

Un signal résultant de l'amplificateur différentiel 36 est comparé dans un comparateur 38 (suivant une fenêtre préréglée 39 définissant l'hystérésis du comparateur 38) avec celui de l'élément de recopie 25, dont la variation est fonction mécaniquement de la position du moteur à courant continu 24 défini ci-dessous.

Le comparateur 38 pourra être à tout moment inhibé, l'interface finale de puissance 41 ne sera donc plus alimentée et le moteur à courant continu 24 s'arrêtera immédiatement.

La rotation dans les deux sens du moteur à courant continu 24 est autorisée par le type de signal émanant du comparateur 38, suivant que la vitesse de l'arbre tournant est trop faible ou trop forte. Ces rotations dans un sens ou dans l'autre du moteur à courant continu 24 impliquent la variation de l'élément de recopie 25 assujetti à l'arbre du moteur 24. Ledit élément de recopie 25 envoie l'information à 38 qui compare donc à tout instant l'état des sorties de l'amplificateur différentiel 36 et de l'élément de recopie 25, avec pour résultat la rotation ou non, dans un sens ou dans l'autre, du moteur à courant continu 24. Celui-ci est monté sur le véhicule 40, de façon à actionner dans le cas d'un véhicule à moteur à essence le papillon de gaz 43 par l'intermédiaire d'une chaîne 42, régulant ainsi le régime du moteur donc la vitesse de rotation de l'arbre poulie du dispositif de prise de force du mouvement, même si celui-ci est sollicité par une charge variable.

Sur un véhicule à moteur diésel, le moteur 24 agit sur la pompe à gaz oil et pour tout véhicule, il peut actionner directement la pédale d'accélérateur par un mouvement linéaire et non rotatif.

Le boîtier 23 porte également un commutateur de sécurité frontal 26, tel que décrit dans la figure 1, un fusible de protection 28 et une prise 27′ permettant la connection d'un câble 22 à dix conducteurs, assurant les différentes liaisons entre ledit boîtier et le véhicule 40 où une autre prise 27 peut être montée à demeure dans le cas d'une utilisation fréquente, pour relier tous les organes placés à l'intérieur de celui-ci, nécessaires à la régulation, tel le moteur 24 et l'élément de recopie 25.

Le câblage intérieur et propre au véhicule 40, comprend également la connection à une source de courant continu 18 qui peut être la batterie du véhicule.

Un organe de commutation manuel 19 permet de mettre en service ou non le système électronique de régulation de vitesse en dérivant ou non l'alimentation positive de la bobine 20 (dans le cas d'un véhicule à essence) ou d'un solenoïde commandant l'arrivée du carburant (dans le cas d'un véhicule diésel), par l'intermédiaire d'un relais 21.

Par ailleurs, si ledit commutateur de sécurité 26b monté sur le boîtier 23 est sollicité, il y a changement d'état du relais 21 provoquant la coupure de l'alimentation de la bobine ou du solenoïde 20 et la remise à zéro de la valeur de consigne par le commutateur de sécurité frontale 26. Le moteur à courant continu 24 se trouve ainsi recalé en position initiale. Par ailleurs, deux organes de commutation 29 et 30, solidaires mécaniquement du moteur à courant continu 24, limitent la course de ce dernier, prévenant toute anomalie quant à un éventuel dépassement de la rotation maximum en agissant sur le comparateur 38.

La figure 4 est une perspective d'un exemple d'application utilisant l'ensemble d'un dispositif suivant l'invention, comportant certains sous-ensembles déjà décrits dans les figures précédentes, et d'un véhicule 40 type camionnette à plateau pouvant transporter une charge. Ce véhicule est de type traction arrière, et ses deux roues motrices R1 et R2 reposent sur deux sous-ensembles C1 et C2 respectivement, chacun de ces sous-ensembles étant décrit dans la figure 1.

Le véhicule est figuré sur un sol en pente et il est placé sous le sous-ensemble C1,un sous-ensemble D de compensation dénivelé tel que décrit dans la figure 2, et qui permet de monter la roue R1 dans le même plan horizontal que la roue R2.

Pour supprimer l'effet du différentiel entre les deux roues et récupérer la puissance du moteur répartie sur celles-ci, un axe 8 est accouplé par deux cardans à verrouillage rapide aux deux embouts cannelés 7 des deux mêmes arbres des deux sous-ensembles C1 et C2, lesquels embouts sont décrits dans la figure 1.

Des rampes mobiles d'accés 16 permettent de faire monter ou descendre le véhicule 40 sur le dispositif par ses propres moyens. Lors de la montée ou de la descente, il est indispensable de bloquer les arbres poulies en rotation avec une clef mobile 17, emmanchée sur des embouts cannelés 7a et venant buter contre le sol.

Une fois en position sur les deux sous-ensembles C1 et C2, les roues R1 et R2 entraînent en marche arrière par frottement les courroies 1 du dispositif qui tournent alors avec leurs arbres poulies et transmettent par rotation la puissance et le mouvement au renvoi d'arbre orientable 9, lequel renvoi reçoit par exemple un axe 10 à cardan à verrouillage rapide entraînant un autre renvoi d'angle 11.

Ledit renvoi d'angle 11 permet d'entraîner à volonté des machines portées par le véhicule 40, sans leurs moteurs : un compresseur de chantier 12 alimentant un ou plusieurs marteaux piqueurs 13, un alternateur 14 permettant l'alimentation, par exemple, d'un poste à soudure 15 ou de n'importe quelle machine dotée d'un moteur électrique autorisant ainsi sciage, tronçonnage, perçage, meulage loin du réseau électrique ou des machines agricoles ou de travaux publics sans leurs moteurs propres et dans des gammes de puissance pouvant être importantes, par exemple de 10 à 30 CV.

Dans ce genre d'utilisation, il est intéressant et même nécessaire de pouvoir réguler la vitesse de rotation d'entraînement de l'arbre 10. Pour cela, le sous-ensemble C1 est équipé avec un boîtier de régulation 23, tel que décrit dans les figures 1 et 3, avec un câble 22 de connection entre les prises 27′ dudit boîtier et 27 du véhicule. Cette dernière prise relie, comme décrit dans la figure 3, les divers organes nécessaires à la régulation, à savoir entre autres, la batterie 18, la bobine ou le solenoïde d'arrivée du carburant 20, le moteur à courant continu 24 et l'élément de recopie 25. En effet, dans une application courante avec le véhicule 40, celui-ci peut être équipé à demeure de son montage de régulation.

Un autre mode de réalisation consiste à accoupler à l'un des axes d'entraînement une machine motrice qui apporte son mouvement au dispositif, le moteur dudit véhicule étant arrêté ou en marche afin de tester par exemple les capacités de freinage de celui-ci ou d'équilibrer sa transmission.

## Revendications

1. Dispositif de prise de mouvement pour véhicule automobile du type de ceux comportant au moins un bâti (4) supportant deux arbres poulies (2), montés parallèles sur roulement, dont l'un au moins est relié à tout moyen de transmission (9) et qui sont entourés par une courroie sans fin (1) qui leur transmet un mouvement rotatif engendré par celui d'une roue (R1) dudit véhicule monté sur ledit dispositif, laquelle roue s'appuie sur ladite courroie et l'entraîne par frottement, caractérisé en ce que les deux dits arbres poulies (2) comportent, sur leur surface externe cylindrique des nervures (71a) circulaires, situées dans des plans perpendiculaires à leurs axes et s'encastrant dans des nervures (71b) de même profil, situées sur la face interne de la courroie et ledit bâti (4) est fixé sur un châssis (47) monté pivotant en rotation dans le plan horizontal par rapport à un deuxième châssis (48), sur lequel il s'appuie, de telle façon que les points de contact entre la roue (R1) du véhicule et ladite courroie (1) ont une direction commune de mouvement tangentiel.

2. Dispositif suivant la revendication 1, caractérisé en ce que ledit châssis (47) comporte un système (46) de suspension et d'amortisseurs et lesdites nervures (71a) sont de forme triangulaire de type Poly V.

3. Dispositif suivant la revendication 1 ou 2, caractérisé en ce qu'il comporte deux bâtis (4) qui sont placés chacun sous une roue du train moteur dudit véhicule, et dont deux arbres (2) sont reliés par un ensemble (8) à cardans leur imposant la même vitesse de rotation.

4. Dispositif suivant la revendication 1, caractérisé en ce que ledit bâti (4) comporte au moins un rouleau (6) de sécurité, monté sur roulement et d'axe vertical, placé sur au moins un côté du bâti, de telle façon qu'il constitue une butée qui empêche toute sortie latérale du véhicule et qui est entraîné en rotation si la roue (R1) de celui-ci vient en appui.

5. Dispositif suivant la revendication 1, caractérisé en ce qu'il comporte au moins un sous-ensemble (D) de compensation de dénivelé, qui comprend un cadre supérieur (56), sur lequel s'appuie le châssis inférieur (48) d'un bâti, et un cadre inférieur (57) qui repose sur le sol, lesquels cadres sont reliés par des bras (58 et 59) articulés et guidés, et par tout moyen connu permettant de les écarter et de les rapprocher pour régler la hauteur du cadre supérieur par rapport au sol.

6. Dispositif suivant la revendication 1, caractérisé en ce que le bâti (4) comporte un tachymètre connu (73) de contrôle de rotation qui comprend un capteur (31) de comptage du nombre de tours de rotation de l'un desdits arbres (2), une horloge (32), un convertisseur (35) et au moins soit un afficheur (34) de la vitesse de rotation, soit un afficheur totalisateur de tours ou de distance.

7. Dispositif selon la revendication 6, caractérisé en ce qu'il comporte un sous-ensemble de régulation qui comprend entre autres un comparateur (38) de la valeur de la vitesse de rotation mesurée par ledit tachymètre avec une valeur de consigne, un moteur (24) à courant continu dont l'arbre agit sur tout moyen connu (43) de contrôle de régime du moteur du véhicule (40), un élément de recopie (25) donnant la position de l'arbre dudit moteur à courant continu et un interface d'alimentation (41) commandé par le comparateur (38) et pilotant le moteur à courant continu (24).

8. Dispositif suivant la revendication 7, caractérisé en ce qu'il comporte en avant de ladite courroie (1) sur laquelle repose la roue (R1) du véhicule, un capteur (26a) de position associé à un commutateur de sécurité (26b), qui coupe l'alimentation générale du véhicule si la roue de celui-ci venait solliciter ledit capteur.

9. Dispositif suivant la revendication 1, caractérisé en ce que au moins l'un des arbres (2) dudit bâti (4) est relié par un ensemble de transmission (10) comportant des cardans et renvois d'angle (11), à toute machine à entraîner qui utilise et consomme cette énergie ainsi récupérée.

10. Dispositif suivant la revendication 1, caractérisé en ce que au moins l'un des arbres (2) desdits bâtis (4) est relié par un ensemble (10) de transmission comportant des cardans et des renvois d'angle à toute machine motrice qui apporte le mouvement et l'entraînement en rotation de ladite courroie.

## Claims

1. Motion take-off device for a motor vehicle of the type comprising at least one box frame (4) supporting two pulley shafts (2) mounted in parallel on bearings, with at least one of them being connected to any transmission means (9) and with the pulley shafts being surrounded by an endless belt (1) for transmitting rotary motion thereto generated by that of a wheel (R1) of said vehicle when mounted on said device, which wheel bears against said belt and drives it by friction, characterized in that both of said pulley shafts (2) include, on their cylindrical outside surface, circular ribs (71a), situated in planes perpendicular to their axes, and interfitting with ribs (71b) of like profile, situated on the inside face of the belt and said box frame (4) is fixed on a swivelling frame (47) pivotally mounted to swivel in the horizontal plane relative to a second stationary frame (48) supporting it, such that the points of contact between the vehicle wheel (R1) and said belt (1) have a common direction of tangential motion.

2. Device according to claim 1, characterized in that said swivelling frame (47) comprises a suspension and shock-absorbing system (46) and said ribs (71a) are Poly-V type triangular-shaped ribs.

3. Device according to claim 1 or 2, characterized in that it comprises two box frames (4) each placed beneath a drive wheel of said vehicle, with two shafts (2) thereof being interconnected by a universal joint assembly (8) causing them to rotate at the same speed.

4. Device according to claim 1, characterized in that said box frame (4) includes at least one safety roller (6) mounted to rotate about a vertical axis and placed on at least one side of the box frame so as to constitute an abutment to prevent the vehicle from escaping sideways from the device and which is rotated if the wheel (R1) of the vehicle comes into engagement therewith.

5. Device according to claim 1, characterized in that it includes at least one height-compensating subassembly D, comprising a top jack frame (56) for supporting the bottom swivelling frame (48) of a box frame, and a bottom jack frame (57) which stands on the ground, said jack frames being interconnected by articulated and guided arms (58 and 59), and by any conventional means which enables the jack frames to be moved towards each other and away from each other in order to adjust the height of the top jack frame relative to the ground.

6. Device according to claim 1, characterized in that the box frame (4) includes a conventional tachometer (73) for monitoring rotation and including a sensor (31) for counting the revolutions of one of said shafts (2), a clock (32), a converter (35), and at least one display (34) for displaying either a rotary speed or else a total number of revolutions or distance.

7. Device according to claim 6, characterized in that it comprises a regulation subassembly which includes, inter alia, a comparator (38) for comparing the value of the speed of rotation as measured by said tachometer with a reference value, a D.C. motor (24) whose shaft acts on any conventional means (43) for controlling the speed of the vehicle engine (40), a transcriber (25) indicating the position of the shaft of said D.C. motor, and a feed interface (41) controlled by the comparator (38) and driving the D.C. motor (24).

8. Device according to claim 7, characterized in that it includes a position sensor (26a) associated with a safety switch (26b) disposed at the leading end of said belt (1) on which the vehicle wheel (R1) stands, said safety switch switching off the vehicle if its wheel engages said sensor.

9. Device according to claim 1, characterized in that at least one of the shafts (2) of said box frame (4) is connected by a transmission assembly (10) including universal joints and angle gear boxes (11) to any drivable machine for utilizing and consuming the energy taken off in this way.

10. Device according to claim 1, characterized in that at least one of the shafts (2) of said box frames (4) is connected via a transmission assembly (10) including universal joints and angle gear boxes to any driving machine which applies rotary motion and drive to said belt.

## Patentansprüche

1. Vorrichtung zur Bewegungsabnahme bei einem Kraftfahrzeug, mit mindestens einem Gestell (4), das zwei Rollen-Wellen (2) trägt, welche auf Wälzlagern parallel angeordnet sind, und von denen mindestens eine mit einer beliebigen Getriebeinrichtung (9) verbunden ist, und um die herum ein Endlosriemen (1) läuft, der sie in eine durch die Bewegung eines Rades (R1) des auf der Vorrichtung angebrachten Fahrzeugs erzeugte Drehbewegung versetzt, welches Rad auf dem Riemen abgestützt ist und diesen durch Reibung mitnimmt, dadurch gekennzeichnet, daß die beiden Rollen-Wellen (2) auf ihrer zylindrischen Außenfläche kreisförmige Rippen (71a) aufweisen, die in zu ihren Achsen senkrechten Ebenen angeordnet sind und in Rippen (71b) desselben Profils eingreifen, die auf der Innenseite des Riemens angeordnet sind, und daß das Gestell (4) auf einem Chassis (47) befestigt ist, welches relativ zu einem zweiten Chassis (48), auf dem es sich abstützt, schwenkbar, bei Drehbarkeit in der horizontalen Ebene, angebracht ist, so daß die Berührungspunkte zwischen dem Rad (R1) des Fahrzeugs und dem Riemen (1) eine gemeinsame Tangentialbewegungsrichtung haben.

2. Vorrichtung nach Anspruch 1, dadurch gekennzeichnet, daß das Chassis (47) ein Aufhängungs- und Dämpfungssystem (46) aufweist und die Rippen (71a) Dreiecksform vom Poly-V-Typ haben.

3. Vorrichtung nach Anspruch 1 oder 2, dadurch gekennzeichnet, daß sie zwei Gestelle (4) umfaßt, die jeweils unter einem Rad des Antriebsstranges des Fahrzeugs angeordnet sind und von denen zwei Wellen (2) durch eine Kardangruppe (8) miteinander verbunden sind, die sie in dieselbe Drehgeschwindigkeit versetzt.

4. Vorrichtung nach Anspruch 1, dadurch gekennzeichnet, daß das Gestell (4) mindestens eine Sicherheitsrolle (6) aufweist, die auf Wälzlagern und mit vertikaler Achse angebracht und auf mindestens einer Seite des Gestells angeordnet ist, um einen Anschlag zu bilden, der jedes seitliche Austreten des Fahrzeugs verhindert und in Drehung versetzt wird, wenn das Rad (R1) desselben in Anschlag kommt.

5. Vorrichtung nach Anspruch 1, dadurch gekennzeichnet, daß sie mindestens eine Niveauausgleichs-Untergruppe (D) umfaßt, die einen oberen Rahmen (56), auf dem das untere Chassis (48) eines Gestells abgestützt ist, und einen unteren Rahmen (57) aufweist, der auf dem Boden ruht, welche Rahmen durch Gelenk- und Führungsarme (58 und 59) sowie durch irgendein bekanntes Mittel, das ein Auseinander- und Zueinanderbewegen derselben zwecks Höheneinstellung des oberen Rahmen in bezug auf den Boden gestattet, miteinander verbunden sind.

6. Vorrichtung nach Anspruch 1, dadurch gekennzeichnet, daß das Gestell (4) einen bekannten Tachometer (73) zur Drehsteueriung umfaßt, der einen Fühler (31) zum Zählen der Anzahl an Umdrehungen einer der Wellen (2), eine Uhr (32), einen Wandler (35) und mindestens entweder eine Anzeige (34) für die Drehgeschwindigkeit oder eine Zählwerksanzeige für die Drehzahl oder Distanz aufweist.

7. Vorrichtung nach Anspruch 6, dadurch gekennzeichnet, daß sie eine Steuerungsuntergruppe umfaßt, die u.a. einem Komparator (38) zum Vergleich des Wertes der vom Tachometer gemessenen Drehgeschwindigkeit mit einem Sollwert, einen Gleichstrommotor (24), dessen Welle auf irgendeine bekannte Einrichtung (43) zur Steuerung der Leistung des Fahrzeugs wirkt, ein Wiederabnahmeelement (25), das die Position der Welle des Gleichstrommotors angibt, und eine Versorgungsschnittstelle (41) aufweist, die vom Komparator (38) gesteuert ist und den Gleichstrommotor (24) ansteuert.

8. Vorrichtung nach Anspruch 7, dadurch gekennzeichnet, daß sie vor dem Riemen (1), auf dem das Rad (R1) des Fahrzeugs ruht, einen Positionsaufnehmer (26a) aufweist, der einem Sicherheitsschalter (26b) zugeordnet ist, welcher die allgemeine Versorgung des Fahrzeugs bei einer Belastung des Aufnehmers durch das Rad unterbricht.

9. Vorrichtung nach Anspruch 1, dadurch gekennzeichnet, daß mindestens eine der Wellen (2) des Gestells (4) durch eine Getriebegruppe (10) mit Kardan und Winkelvorgelege (11) an irgendeine anzutreibende Maschine angeschlossen ist, die die so gewonnene Energie nutzt und verbraucht.

10. Vorrichtung nach Anspruch 1, dadurch gekennzeichnet, daß mindestens eine der Wellen (2) der Gestelle (4) durch eine Getriebegruppe (10) mit Kardan und Winkelvorgelege an irgendeine Antriebsmaschine angeschlossen ist, die den Riemen in Bewegung und in Umlauf versetzt.
